# FASCICULE DE BREVET EUROPEEN

(11) **EP 3 849 730 B1**
(45) Date de publication et mention de la délivrance du brevet: **29.06.2022**
(21) Numéro de dépôt: 19790649.8
(22) Date de dépôt: 16.09.2019
(51) Int. Cl.: B33Y 30/00, B22F 10/14, B22F 10/68, B33Y 40/20, B22F 12/84, B22F 10/64

(54) **INSTALLATION DE FABRICATION ADDITIVE PERFECTIONNÉE**
VERBESSERTE ANLAGE ZUR GENERATIVEN FERTIGUNG
IMPROVED ADDITIVE MANUFACTURING FACILITY

(30) Priorité: 14.09.2018 FR 1858287
(43) Date de publication de la demande: 21.07.2021
(73) Titulaire: Centre Technique Des Industries Mecaniques, 60300 Senlis (FR)
(72) Inventeur: BOUCAUD, Benoît, 69230 Saint-Genis-Laval (FR); CALVES, Paul, 42170 Saint-Just Saint-Rambert (FR); PETAVY, Quentin, 43600 Sainte-Sigolène (FR)
(74) Mandataire: Fédit-Loriot
(86) Numéro de dépôt international: PCT/FR2019/052153
(87) Numéro de publication internationale: WO 2020/053535

(56) Documents cités:
- DE-A1-102013 206 542
- DE-A1-102013 215 748
- US-A1- 2002 090 410
- US-A1- 2015 224 575

## Description

La présente invention se rapporte à une installation de fabrication additive pour produire des pièces frittées.

Un domaine d'application envisagé est notamment, mais non exclusivement, celui de la production de pièces complexes, métalliques ou céramiques, en petites et moyennes séries.

Des installations de fabrication additive connues, divulguées par exemple dans DE 10 2013 215 748 A1 et DE 10 2013 206 542 A1, permettent de produire une pièce métallique couche par couche à partir de la lecture d'un fichier 3D de la pièce à produire. Ces installations comprennent un dispositif de stratification incluant un réservoir de matériau métallique pulvérulent pour pouvoir superposer une pluralité de couches de particules dudit matériau. En outre, elles comprennent un dispositif laser orientable qui est entraîné alors en mouvement pour balayer chaque couche après son dépôt selon le dessin de la pièce à réaliser de façon produire la fusion des particules métalliques suivant ledit dessin. De la sorte, couche après couche la pièce s'élabore selon une direction verticale jusqu'à la dernière couche au sommet de la pièce. Ensuite, la pièce ainsi fabriquée est débarrassée des particules de poudre non fusionnées et elle peut alors être directement mise en œuvre dans son application.

Toutefois, ce procédé est relativement coûteux et de nouveaux procédés plus productifs ont vu le jour. Ces procédés, divulgués par exemple dans US 2015/224575 A1 et US 2002/090410 A1, visent tout d'abord à lier entre elles les particules métalliques couche par couche au moyen d'un liant, puis ensuite à débarrasser la ou les pièces de particules métalliques liées entre elles des particules non liées pour pouvoir ensuite procéder au frittage des particules liées entre elles. On obtient de la sorte une ou des pièces métalliques.

Les installations de mise en œuvre de ces procédés comprennent, outre un dispositif de stratification, un dispositif d'impression pour imprimer le liant sur chacune des couches de particules de manière à lier entre elles des particules métalliques destinées à former lesdites pièces métalliques. Grâce au dispositif d'impression, il est possible d'imprimer le liant de manière très précise et à grande cadence en fonction du nombre de buses d'injection mise en œuvre. Et de la sorte, il est possible de produire simultanément un grand nombre de pièces, de même forme par exemple. Aussi, les particules métalliques non liées s'accumulent autour des particules métalliques liées aptes à former les pièces. Et les particules métalliques liées et non liées forment ensemble un seul bloc stratifié que l'on porte ensuite dans une enceinte étanche pour pouvoir le débarrasser des particules non liées et dégager l'ébauche des pièces ainsi réalisées. Ces ébauches sont usuellement dénommées « pièce à vert ». Elles sont ensuite portées dans un four pour procéder au frittage.

Si ces dernières installations permettent une meilleure productivité, que les installations antérieures, l'opération visant à débarrasser les particules non liées des particules liées destinées à former les pièces, est relativement délicate. En effet, les pièces de particules métalliques liées sont extrêmement fragiles, et les particules métalliques sont nocives. Aussi, les particules non liées sont retirées manuellement dans des boîtes étanches à gants au moyen d'un pistolet à air. Partant, cette opération manuelle est relativement longue.

Aussi, un problème qui se pose et que vise à résoudre la présente invention est de fournir une installation qui permette de raccourcir cette étape d'extraction des particules non liées du bloc stratifié.

Dans ce but, il est proposé une installation de fabrication additive, selon la revendication 1, pour pouvoir produire des pièces frittées, ladite installation de fabrication comprenant : un dispositif de stratification pour superposer une pluralité de couches de particules d'un matériau pulvérulent ; un dispositif d'impression pour imprimer un liant sur chacune des couches de particules dudit matériau pulvérulent de manière à lier entre elles des particules destinées à former lesdites pièces frittées, tandis que les particules non liées s'accumulent autour des particules liées en formant un seul bloc stratifié ; et, un dispositif d'extraction desdites particules non liées dudit seul bloc stratifié pour dégager lesdites pièces de particules liées. Ledit dispositif d'extraction comprend une cloche présentant une pluralité d'orifices, et ladite cloche est adaptée à venir coiffer de manière étanche ledit seul bloc stratifié pour pouvoir injecter un gaz à travers une partie des orifices de ladite pluralité d'orifices de manière à détacher lesdites particules non liées dudit seul bloc stratifié, tandis que ledit gaz entraîne les particules détachées à travers l'autre partie desdits orifices, les orifices de ladite une partie des orifices sont uniformément répartis dans ladite cloche, tandis que les orifices de ladite autre partie desdits orifices sont uniformément répartis entre les orifices de ladite une partie des orifices.

Ainsi, une caractéristique de l'invention réside dans la mise en œuvre d'une cloche permettant de confiner le bloc stratifié dans un espace clos étanche et dans la possibilité de pouvoir projeter à travers la cloche un gaz sous pression, par exemple de l'air, pour détacher les particules non liées. Les particules non liées sont ainsi qualifiées par rapport à celles qui le sont et qui vont constituer la pièce ou les pièces. Autrement dit, les particules non liées sont libres. Les particules détachées en suspension dans l'air sont alors entraînées en retour à travers l'autre partie des orifices de la cloche. De la sorte, l'opération peut être réalisée automatiquement sans intervention humaine et par conséquent, sans risque de casse des pièces. Au surplus, on réduit substantiellement le temps d'intervention, par exemple de moitié.

Par ailleurs, lorsque le matériau pulvérulent présente des risques de réactions avec l'oxygène de l'air, le gaz utilisé est un gaz neutre ou un gaz inerte, par exemple un gaz comprenant de l'argon, ou bien du diazote.

De surcroît, ledit matériau pulvérulent est de préférence un matériau métallique pulvérulent. On obtient de la sorte des pièces métalliques frittées présentant un bon état de surface.

Néanmoins, selon un autre mode de réalisation, on met en œuvre des matériaux pulvérulents non métalliques et/ou inorganiques, tels des oxydes, des carbures, des nitrures ou encore des borures, pour former des pièces en céramique.

Selon une caractéristique de mise en œuvre de l'invention particulièrement avantageuse, ladite cloche présente une partie inférieure sensiblement cylindrique et une partie supérieure percée de ladite pluralité d'orifices. Par exemple, la partie inférieure de la cloche est un cylindre droit à courbe directrice rectangulaire. Elle permet ainsi de confiner un bloc stratifié parallélépipédique rectangle. Le bloc stratifié peut comporter une pluralité de pièces « à vert » identiques et par exemple agencées en couches superposées. On observera que le dispositif de stratification superpose des couches rectangulaires et que le dispositif d'impression, de par son mode de fonctionnement, est le plus efficient lorsqu'il imprime précisément une couche rectangulaire comme on l'expliquera plus en détail dans la suite de la description.

En outre, ladite partie supérieure de la cloche est sensiblement plane. De la sorte, le volume défini par la cloche est de forme parallélépipédique rectangle également et elle est alors parfaitement adaptée à un bloc stratifié de géométrie analogue.

De plus, ladite cloche comprend en outre un plateau monté réglable à l'intérieur de ladite partie inférieure. Ainsi, le plateau vient refermer la partie inférieure de la cloche et il est monté à coulissement à l'intérieur. De la sorte, le plateau sur lequel est appuyé le bloc stratifié peut être ajusté verticalement à l'intérieur de la cloche par rapport à la partie supérieure de manière à pouvoir réduire le volume libre autour du bloc stratifié à l'intérieur de la cloche. Conséquemment, l'extraction des particules métalliques libres est plus rapide.

Selon un mode de réalisation de l'invention particulièrement avantageux, le diamètre des orifices de ladite une partie des orifices est inférieur au diamètre des orifices de ladite autre partie desdits orifices. Ainsi, le gaz est injecté à l'intérieur de la cloche à travers l'orifice de ladite une partie des orifices à grande vitesse de manière à avoir un impact important sur le bloc stratifié pour détacher des particules métalliques libres. En revanche, le gaz chargé en particules libres s'échappe de la cloche à travers les autres orifices à une vitesse inférieure.

Selon l'invention, les orifices de ladite une partie des orifices sont uniformément répartis dans ladite cloche, tandis que les orifices de ladite autre partie desdits orifices sont uniformément répartis entre les orifices de ladite une partie des orifices. De la sorte, les particules métalliques libres du bloc stratifié sont extraites de manière uniforme.

En outre, et selon une première variante de réalisation, l'installation comprend une enceinte étanche pour recevoir ladite cloche. Ainsi, selon cette première variante, une enceinte étanche dédiée est installée au voisinage des dispositifs de stratification et d'impression pour pouvoir recevoir le bloc stratifié après qu'il a été produit. Il est en effet important que le transfert du bloc stratifié s'opère selon une course définie, la plus courte possible et sans heurt afin d'éviter la destruction des « pièces à vert ». Aussi, cette enceinte étanche comporte des moyens thermiques permettant de faire réagir le liant afin qu'il puisse relier ensemble les particules imprimées. Ensuite, La cloche du dispositif d'extraction est alors ajustée sur le bloc stratifié puis l'enceinte étanche est refermée pour procéder à l'opération d'extraction des particules métalliques libres. De la sorte, en évite toute dissémination des particules métalliques libres dans l'environnement de l'installation et des opérateurs.

Selon une seconde variante de réalisation, ledit dispositif de stratification et ledit dispositif d'impression sont installés à l'intérieur de ladite enceinte. Ainsi, le dispositif de stratification et le dispositif d'impression sont opposés l'un de l'autre par rapport à une plate-forme centrale. Et ils interviennent séquentiellement l'un pour déposer la couche de particules métalliques, l'autre pour imprimer ladite couche. La cloche est alors mobile verticalement, entre une position haute située à l'aplomb de ladite plate-forme et une position basse en appui sur ladite plate-forme pour pouvoir coopérer à l'extraction des particules métalliques libres. Aussi, l'enceinte inclut également des moyens thermiques permettant de faire réagir le liant après que la dernière couche de particules a été déposée et imprimée et avant que la cloche ne vienne coiffer le bloc stratifié. Ainsi, la fabrication du bloc stratifié, la réaction du liant et l'extraction des particules métalliques libres sont réalisées dans une seule enceinte séquentiellement sans avoir à ouvrir l'enceinte entre les trois opérations. On obtient de la sorte des gains de temps et aussi on réduit plus encore les risques de contamination de l'air ambiant avec des particules métalliques libres.

Par ailleurs, l'installation comprend en outre un dispositif de traitement thermique pour provoquer le frittage desdites particules liées desdites pièces. Le dispositif de traitement thermique est installé à proximité du dispositif d'extraction, de manière à réduire les risques de destruction des pièces « à vert » durant le transfert.

Aussi, selon un mode particulier de mise en œuvre de l'invention, ledit dispositif d'extraction comprend en outre un transducteur électromécanique pour entraîner en vibration ledit seul bloc stratifié. De la sorte, le transducteur électromécanique contribue au détachement des particules métalliques libres autour des pièces « à vert » élaborées durant l'impression.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique d'une première partie de l'installation de fabrication additive conforme à l'invention ;
- la Figure 2 est vue schématique d'une deuxième partie de l'installation de fabrication additive conforme à l'invention accueillant l'objet fabriqué dans la première partie ;
- la Figure 3 est une vue schématique d'une troisième partie de l'installation de fabrication additive conforme à l'invention accueillant l'objet obtenu dans la deuxième partie ;
- la Figure 4 est vue schématique de la troisième partie après transformation de l'objet obtenu dans la deuxième partie.

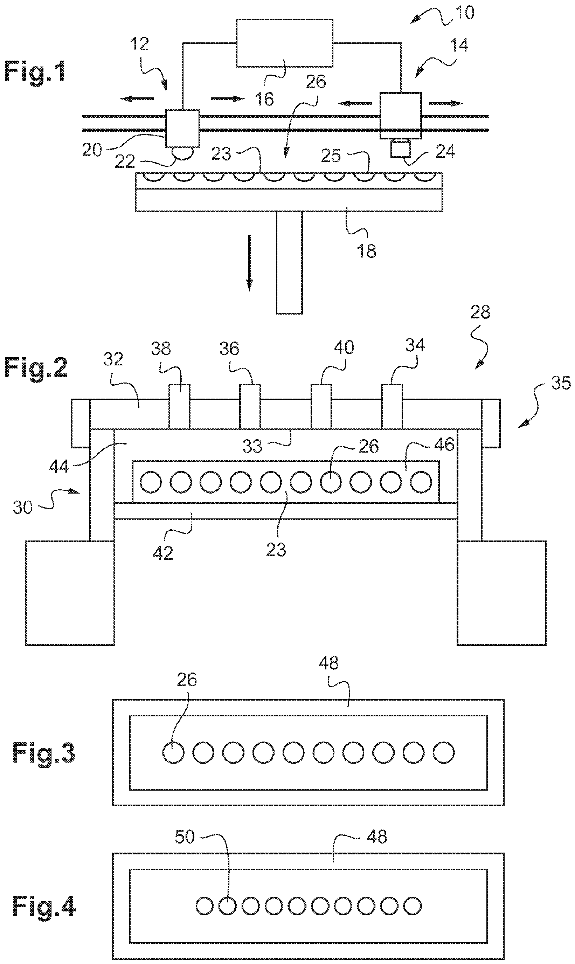

La Figure 1 illustre de manière schématique une installation de fabrication additive 10 de pièces métalliques comprenant un dispositif de stratification 12 et un dispositif d'impression 14. Ces deux dispositifs sont mobiles en translation selon un plan sensiblement horizontal et ils sont commandés grâce a un boîtier de commande 16.

A l'aplomb des deux dispositifs précités 12, 14, figure un plateau de réception 18, mobile en translation selon une direction verticale. L'ensemble est alors installé dans une enceinte étanche pour des raisons que l'on évoquera ci-après. Ainsi, le dispositif de stratification 12 permet de déposer, sur le plateau de réception 18, une couche régulière de particules d'un matériau métallique pulvérulent, par exemple un acier inoxydable 316L. Aussi, le dispositif de stratification 12 présente un réservoir de particules métalliques 20 équipé d'un rouleau égalisateur 22 permettant non seulement d'uniformiser l'épaisseur de la couche de particules métalliques mais aussi, de procéder à un tassement sensible de la couche. Après que la couche de particules métalliques a été déposée, le dispositif de stratification est écartée latéralement du plateau de réception 18, et le dispositif d'impression 14 est alors mis en œuvre par l'intermédiaire du boîtier de commande 16. Ce boîtier de commande 16 comprend une mémoire dans laquelle sont chargées par exemple les coordonnées spatiales d'une pluralité de pièces à réaliser. Les pièces à réaliser sont ici toutes identiques. Il pourrait bien évidemment en être autrement.

Aussi, le dispositif d'impression 14 comprend une tête d'impression 24 équipée d'une pluralité de buses permettant de déposer sur la couche de particules métalliques un liant, et plus précisément un composé de polymères réactifs par exemple. La tête d'impression 24 va alors déposer sur la couche de particules métalliques, le liant dans les zones pleines des futures pièces. Le liant ainsi déposé va alors se raffermir et durcir pour maintenir et lier ensemble les particules métalliques 25 aptes à constituer les pièces. Les particules métalliques non imprégnées de liant 23 demeurent alors libres. Le liant se solidifie soit à l'air dès qu'il est projeté sur les particules métalliques, ou bien il peut nécessiter de l'énergie thermique qui peut être fournie simultanément.

Après que la première couche de particules métalliques a été imprimée du liant précité, le dispositif d'impression 14 est à son tour écarté latéralement du plateau de réception 18, tandis que le plateau de réception 18 est abaissé d'une distance correspondant à l'épaisseur d'une couche de particules métalliques. Ensuite, le dispositif de stratification 12 est à nouveau mis en œuvre pour pouvoir déposer une seconde couche de particules métalliques sur la première déjà imprimée. Le dispositif de stratification 12 laisse sa place au dispositif d'impression 14 qui va imprimer une nouvelle fois dans les zones pleines des futures pièces, une couche de liant. On comprend que le liant diffuse alors, selon une composante verticale, à travers la couche de particules métalliques, y compris à l'interface entre les deux couches de particules métalliques dans les zones des particules métalliques liées de la couche de dessous. De la sorte, on relie ensemble non seulement les particules métalliques de la couche dernièrement déposée selon un plan horizontal, mais aussi les particules métalliques liées de la couche du dessous, selon une direction verticale.

De la sorte, les dispositifs de stratification 12 et d'impression 14 mis en œuvre successivement, élaborent en trois dimensions une pluralité d'ébauches 26 de pièces faites de particules métalliques liées entre elles par ledit liant. Ces ébauches sont communément dénommées pièces « à vert ». Elles sont alors noyées dans un lit de particules métalliques non liées qui par accrétion forment un seul bloc stratifié. Sur la Figure 1, les ébauches 26 réalisées sont des sphères pour simplifier la représentation. Toutefois, l'installation de fabrication additive est ici destinée à réaliser des pièces complexes en petites et moyennes séries, et que l'on ne peut réaliser en une seule pièce par des moyens traditionnels.

Il convient à présent d'extraire les particules métalliques non liées, ou libres, du bloc stratifié en préservant les pièces « à vert », avant de procéder à un frittage que l'on décrira dans la suite de la description.

On se reportera à présent sur la Figure 2 illustrant un dispositif d'extraction 28 des particules métalliques non liées.

Le dispositif d'extraction 28 comprend une cloche 35 présentant une partie inférieure 30 de symétrie cylindrique à courbe directrice rectangulaire et une partie supérieure 32 sensiblement plane, dont la normale est sensiblement parallèle aux génératrices de la partie inférieure 30. La partie supérieure 32 présente une paroi interne 33 dans laquelle débouchent des orifices d'injection 34, 36 et des orifices d'aspiration 38, 40 que l'on décrira plus en détail ci-après.

La cloche 35 comporte également un plateau support 42 monté à coulissement dans la partie inférieure 30 de la cloche 35 et de manière réglable selon une direction verticale. Le plateau support 42 et la partie inférieure 30 de la cloche 35 sont liés de manière étanche de façon à ménager un espace confiné 44 à l'intérieur de la cloche 35. Le plateau support 42 reçoit alors en appui un bloc stratifié 46 obtenu grâce à la mise en œuvre des éléments illustrés sur la Figure 1. Le plateau support 42 est alors ajusté à l'intérieur de la partie inférieure 30 en fonction des dimensions du bloc stratifié. Aussi, le plateau support 42 est réglé verticalement de manière à ce que le bloc stratifié 46 soit situé à une distance de la paroi interne 33 de la partie supérieure 32 de l'ordre du centimètre, par exemple 5 cm.

Les orifices d'injection 34, 36 sont régulièrement répartis dans la partie supérieure 32 tandis que les orifices d'aspiration 38, 40, sont également régulièrement répartis entre les orifices d'injection 34, 36. Avantageusement, les orifices d'injection 34, 36 sont en nombre équivalent à celui des orifices d'aspiration 38, 40. En revanche, la section droite des orifices d'injection 34, 36 est inférieure à la section des orifices d'aspiration 38, 40.

Les orifices injection 34, 36 sont reliés à une alimentation en air comprimé à une pression inférieure à 10 bar, par exemple entre 4 et 5 bar. Les orifices d'aspiration 38, 40 sont mis en dépression par exemple entre 120 et 130 millibars.

De la sorte, grâce aux orifices d'injection 34, 36, l'air sous pression projeté contre le bloc stratifié 46 provoque la désagrégation des accrétions de particules métalliques non liées, tandis que les particules métalliques liées par le liant imprimé et formant les pièces « à vert », demeurent en position fixe. Elles ne sont nullement dégradées, bien que fragile, par l'injection d'air sous pression. Concomitamment, grâce aux orifices d'aspiration 38, 40, l'air projeté à travers les orifices injection 34, 36 et chargé en particules métalliques est aspiré. Partant, les particules métalliques non liées se détachent du bloc stratifié 46 pour être évacuées par les orifices d'aspiration 38, 40, tandis que les pièces « à vert » se découvrent et sont mises à nu. La durée de mise en œuvre de l'injection d'air et de l'aspiration peut être importante, par exemple quelques heures en fonction du volume de particules métalliques non liées à extraire. Cette durée est toutefois de l'ordre de la moitié de la durée d'extraction des particules métalliques non liées du bloc stratifié 46, lorsque l'opération est réalisée manuellement.

Selon une première variante de réalisation de l'invention particulièrement avantageuse, le dispositif d'extraction 28 est installé à l'intérieur de l'enceinte étanche précitée dans laquelle sont eux-mêmes installés les dispositifs de stratification 12 et d'impression 14. Ainsi, la cloche 35 est montée mobile verticalement à l'intérieur de l'enceinte. Elle demeure dans une position haute, à l'aplomb du plateau de réception 18 et au-dessus des dispositifs de stratification 12 et d'impression 14 durant l'étape de réalisation du bloc stratifié 46. Elle est alors abaissée à la fin de cette étape pour venir coiffer le bloc stratifié 46. Partant, le plateau de réception 18 joue le rôle du plateau support 42 représenté sur la Figure 2, et en présente les mêmes dimensions de manière à pouvoir venir s'ajuster à coulissement à l'intérieur de la partie inférieure 30 de la cloche 35.

Un tel mode de mise en œuvre permet non seulement d'améliorer la productivité en éliminant les tâches manuelles de transfert du bloc stratifié 46, mais aussi, de limiter les risques de rebut, puisque les pièces « à vert » ne subissent aucun choc. De surcroît, les risques de pollution de l'air ambiant en particules métalliques sont atténués.

Selon une seconde variante de réalisation, une autre enceinte étanche est installée au voisinage de l'enceinte précité accueillant des dispositifs de stratification 12 et d'impression 14 de manière à pouvoir transférer aisément et sans heurt le bloc stratifié 46 puis installer la cloche 35 pour ensuite refermer l'enceinte est procéder au processus d'extraction des particules métalliques libres.

Aussi, et selon un mode de réalisation non représenté, le plateau de réception 18 dans la première variante de réalisation ou bien le plateau support 42 dans la seconde, sont équipés d'un transducteur électromécanique permettant d'imprimer des vibrations au plateau de réception 18 ou bien au plateau support 42, lors de la phase d'extraction des particules métalliques. En effet, ces vibrations permettent de fournir de l'énergie mécanique au bloc stratifié 46 de manière à désolidariser plus aisément les particules métalliques libres les unes des autres. On accélère de la sorte l'extraction des particules métalliques.

Ensuite, après que les pièces « à vert » ont été mises à nu, on les installe à l'intérieur d'un four 48 comme illustré sur la Figure 3, de manière à provoquer le frittage des particules métalliques des pièces « à vert » 26. La température du four est ajustée sensiblement en dessous de la température de fusion du métal des particules. Grâce à la chaleur, le liant est dénaturé et s'échappe dans les fumées. Et aussi, les particules métalliques se soudent à leurs interfaces.

Comme illustré sur la Figure 4, on obtient alors des pièces finies 50 dont la taille est sensiblement réduite dans l'opération de frittage.

## Revendications

1. Installation de fabrication additive pour pouvoir produire des pièces frittées (50), ladite installation de fabrication comprenant :
- un dispositif de stratification (12) pour superposer une pluralité de couches de particules d'un matériau pulvérulent ;
- un dispositif d'impression (14) pour imprimer un liant sur chacune des couches de particules dudit matériau pulvérulent de manière à lier entre elles des particules (25) destinées à former lesdites pièces frittées (50), tandis que les particules non liées (23) s'accumulent autour des particules liées (25) en formant un seul bloc stratifié (46) ; et,
- un dispositif d'extraction (28) desdites particules non liées (23) dudit seul bloc stratifié (46) pour dégager lesdites pièces de particules liées ;
**caractérisée en ce que** ledit dispositif d'extraction (28) comprend une cloche (35) présentant une pluralité d'orifices (34, 36, 38, 40), ladite cloche (35) étant adaptée à venir coiffer de manière étanche ledit seul bloc stratifié (46) pour pouvoir injecter un gaz à travers une partie des orifices (34, 36) de ladite pluralité d'orifices de manière à détacher lesdites particules non liées (23) dudit seul bloc stratifié, tandis que ledit gaz entraîne les particules détachées à travers l'autre partie desdits orifices (38, 40),
et **en ce que** les orifices (34, 36) de ladite une partie des orifices sont uniformément répartis dans ladite cloche (35), tandis que les orifices (38, 40) de ladite autre partie desdits orifices sont uniformément répartis entre les orifices (34, 36) de ladite une partie des orifices.

2. Installation de fabrication additive selon la revendication 1, **caractérisée en ce que** ledit matériau pulvérulent est un matériau métallique pulvérulent.

3. Installation de fabrication additive selon la revendication 1 ou 2, **caractérisée en ce que** ladite cloche (35) présente une partie inférieure (30) sensiblement cylindrique et une partie supérieure (32) percée de ladite pluralité d'orifices (34, 36, 38, 40).

4. Installation de fabrication additive selon la revendication 3, **caractérisée en ce que** ladite partie supérieure (32) est sensiblement plane.

5. Installation de fabrication additive selon la revendication 3 ou 4, **caractérisée en ce que** ladite cloche (35) comprend en outre un plateau (42) monté réglable à l'intérieur de ladite partie inférieure (30).

6. Installation de fabrication additive selon l'une quelconque des revendications 1 à 5, **caractérisée en ce que** le diamètre des orifices (34, 36) de ladite une partie des orifices est inférieur au diamètre des orifices (38, 40) de ladite autre partie desdits orifices.

7. Installation de fabrication additive selon l'une quelconque des revendications 1 à 6, **caractérisée en ce qu'**elle comprend en outre une enceinte étanche pour recevoir ladite cloche (35).

8. Installation de fabrication additive selon la revendication 7, **caractérisée en ce que** ledit dispositif de stratification (12) et ledit dispositif d'impression (14) sont installés à l'intérieur de ladite enceinte.

9. Installation de fabrication additive selon l'une quelconque des revendications 1 à 8, **caractérisée en ce qu'**elle comprend en outre un dispositif de traitement thermique (48) pour provoquer le frittage desdites particules liées desdites pièces (26).

10. Installation de fabrication additive selon l'une quelconque des revendications 1 à 9, **caractérisée en ce que** ledit dispositif d'extraction (28) comprend en outre un transducteur électromécanique pour entraîner en vibration ledit seul bloc stratifié (46).

## Patentansprüche

1. Eine additive Fertigungsanlage, um gesinterte Teile (50) herstellen zu können, wobei die genannte Fertigungsanlage Folgendes umfasst:
- eine Schichtbildungsvorrichtung (12), zum Übereinanderlegen einer Vielzahl von Partikelschichten aus einem pulverförmigen Material;
- eine Druckvorrichtung (14) zum Drucken eines Bindemittels auf jede der Partikelschichten des genannten pulverförmigen Materials, um Partikel (25) zur Bildung der genannten gesinterten Teile (50) aneinander zu binden, während sich die ungebundenen Partikel (23) um die gebundenen Partikel (25) herum ansammeln und einen einzelnen geschichteten Block (46) bilden; und,
- eine Extraktionsvorrichtung (28) zum Entfernen der genannten ungebundenen Partikel (23) aus dem einzelnen geschichteten Block (46), um die Teile aus gebundenen Partikeln zu befreien;
**dadurch gekennzeichnet, dass** die genannte Extraktionsvorrichtung (28) eine Glocke (35) mit einer Vielzahl von Öffnungen (34, 36, 38, 40) umfasst, wobei die genannte Glocke (35) dazu angepasst ist, den einzelnen geschichteten Block (46) abdichtend zu überdecken, um ein Gas durch einen Teil der Öffnungen (34, 36) der genannten Vielzahl von Öffnungen injizieren zu können, um die genannten ungebundenen Partikel (23) von dem einzelnen geschichteten Block zu lösen, während das genannte Gas die gelösten Partikel durch den anderen Teil der genannten Öffnungen (38, 40) mitreißt,
**und dadurch, dass** die Öffnungen (34, 36) des genannten einen Teils der Öffnungen gleichmäßig in der genannten Glocke (35) verteilt sind, während die Öffnungen (38, 40) des genannten anderen Teils der Öffnungen gleichmäßig zwischen den Öffnungen (34, 36) des genannten einen Teils der Öffnungen verteilt sind.

2. Die additive Fertigungsanlage nach Anspruch 1, **dadurch gekennzeichnet, dass** das genannte pulverförmige Material ein metallisches pulverförmiges Material ist.

3. Die additive Fertigungsanlage nach Anspruch 1 oder 2, **dadurch gekennzeichnet, dass** die genannte Glocke (35) einen im Wesentlichen zylindrischen unteren Teil (30) und einen oberen Teil (32) aufweist, der von der genannten Vielzahl von Öffnungen (34, 36, 38, 40) durchbrochen ist.

4. Die additive Fertigungsanlage nach Anspruch 3, **dadurch gekennzeichnet, dass** der genannte obere Teil (32) im Wesentlichen eben ist.

5. Die additive Fertigungsanlage nach Anspruch 3 oder 4, **dadurch gekennzeichnet, dass** die genannte Glocke (35) ferner eine Platte (42) umfasst, die verstellbar im Inneren des genannten unteren Teils (30) montiert ist.

6. Die additive Fertigungsanlage nach irgendeinem der Ansprüche von 1 bis 5, **dadurch gekennzeichnet, dass** der Durchmesser der Öffnungen (34, 36) des genannten einen Teils der Öffnungen kleiner ist als der Durchmesser der Öffnungen (38, 40) des genannten anderen Teils der genannten Öffnungen.

7. Die additive Fertigungsanlage nach irgendeinem der Ansprüche von 1 bis 6, **dadurch gekennzeichnet, dass** sie ferner eine abgedichtete Einfassung zur Aufnahme der genannten Glocke (35) umfasst.

8. Die additive Fertigungsanlage nach Anspruch 7, **dadurch gekennzeichnet, dass** die genannte Schichtbildungsvorrichtung (12) und die genannte Druckvorrichtung (14) innerhalb der genannten Einfassung installiert sind.

9. Die additive Fertigungsanlage nach irgendeinem der Ansprüche von 1 bis 8, **dadurch gekennzeichnet, dass** sie ferner eine Wärmebehandlungsvorrichtung (48) umfasst, um das Sintern der genannten gebundenen Partikel der genannten Teile (26) zu bewirken.

10. Die additive Fertigungsanlage nach irgendeinem der Ansprüche von 1 bis 9, **dadurch gekennzeichnet, dass** die Extraktionsvorrichtung (28) ferner einen elektromechanischen Wandler umfasst, um den einzelnen geschichteten Block (46) in Schwingung zu versetzen.

## Claims

1. Additive manufacturing equipment for being able to produce sintered parts (50), said manufacturing equipment comprising:
- a stratification device (12) for superimposing a plurality of layers of particles of a powdery material;
- a printing device (14) for printing a binder on each of the layers of particles of said powdery material so as to bind together particles (25) intended to form said sintered parts (50), while the non-bound particles (23) accumulate around the bound particles (25) while forming a single stratified block (46); and
- a device (28) for extracting said non-bound particles (23) of said single stratified block (46) to leave clear said parts of bound particles;
**characterised in that** said extraction device (28) comprises a bell (35) having a plurality of orifices (34, 36, 38, 40), said bell (35) being adapted for sealingly fitting on top of said single stratified block (46) to be able to inject a gas through some of the orifices (34, 36) of said plurality of orifices so as to detach said non-bound particles (23) from said single stratified block, while said gas entrains the detached particles through the rest of said orifices (38, 40),
and **in that** the orifices (34, 36) of said some of the orifices are uniformly distributed in said bell (35), while the orifices (38, 40) of said rest of said orifices are uniformly distributed between the orifices (34, 36) of said some of the orifices.

2. Additive manufacturing equipment according to claim 1, **characterised in that** said powdery material is a powdery metallic material.

3. Additive manufacturing equipment according to claim 1 or 2, **characterised in that** said bell (35) has a substantially cylindrical lower part (30) and an upper part (32) pierced with said plurality of orifices (34, 36, 38, 40).

4. Additive manufacturing equipment according to claim 3, **characterised in that** said upper part (32) is substantially planar.

5. Additive manufacturing equipment according to claim 3 or 4, **characterised in that** said bell (35) further comprises a plate (42) mounted so as to be adjustable inside said lower part (30).

6. Additive manufacturing equipment according to any one of claims 1 to 5, **characterised in that** the diameter of the orifices (34, 36) of said some of the orifices is less than the diameter of the orifices (38, 40) of said rest of said orifices.

7. Additive manufacturing equipment according to any one of claims 1 to 6, **characterised in that** it further comprises a sealed chamber for receiving said bell (35).

8. Additive manufacturing equipment according to claim 7, **characterised in that** said stratification device (12) and said printing device (14) are installed inside said chamber.

9. Additive manufacturing equipment according to any one of claims 1 to 8, **characterised in that** it further comprises a heat-treatment device (48) for causing the sintering of said bound particles of said parts (26).

10. Additive manufacturing equipment according to any one of claims 1 to 9, **characterised in that** said extraction device (28) further comprises an electromechanical transducer for vibrating said single stratified block (46).
